# EUROPÄISCHE PATENTSCHRIFT

(11) **EP 2 111 737 B1**
(45) Veröffentlichungstag und Bekanntmachung des Hinweises auf die Patenterteilung: **16.05.2012**
(21) Anmeldenummer: 09155968.2
(22) Anmeldetag: 24.03.2009
(51) Int. Cl.: A01D 34/73

(54) **Messerbalken und Mähgerät oder Mähwerk**
Knife bar and mowing device or mower
Barre porte-lames et faucheuse ou mécanisme de tonte

(30) Priorität: 25.04.2008 DE 102008021024
(43) Veröffentlichungstag der Anmeldung: 28.10.2009
(73) Patentinhaber: SABO-Maschinenfabrik GmbH, 51645 Gummersbach (DE)
(72) Erfinder: Dzierzewski, Jürgen, 51674, Wiehl (DE)
(74) Vertreter: Löser, Iris

(56) Entgegenhaltungen:
- EP-A- 1 260 130
- DE-A1- 19 528 832
- US-A- 5 327 710
- US-A- 5 442 902
- US-B1- 6 487 840
- US-B1- 6 490 850

## Beschreibung

Die Erfindung betrifft einen Messerbalken, insbesondere für ein Mähgerät, sowie ein Mähgerät bzw. Mähwerk.

Zur Rasenpflege werden häufig Rasenmäher verwendet, die eine oder mehrere Trenneinrichtungen in der Art von Schneidmessern aufweisen, welche Gras bzw. Vegetation abtrennen. Das abgetrennte Gut wird durch eine entsprechende Öffnung in dem Gehäuse des Rasenmähers abgegeben und auf dem gemähten Rasen abgelegt oder durch einen an die Öffnung angrenzend angeschlossenen Fangsack aufgenommen. Sowohl die auf dem Rasen abgelegten Gutabschnitte als auch die durch den Fangsack aufgenommenen müssen beseitigt bzw. entsorgt werden. Um diesem Problem entgegenzuwirken, sind Rasenmäher im Einsatz, welche eine sogenannte Mulchfunktion aufweisen, d.h. das Gras wird nicht nur abgetrennt, sondern durch speziell ausgebildete Trenneinrichtungen fein zerkleinert und auf dem gemähten Rasen abgelegt bzw. in diesen eingeblasen. Auf diese Weise entfällt nicht nur das Problem der Entsorgung, sondern die abgetrennten Pflanzenabschnitte werden dem Rasen als biologischer Dünger wieder zugeführt und wirken darüber hinaus als Feuchtigkeitsspeicher.

Die DE-A1-10042086 zeigt einen Messerbalken mit Flügelenden, die als gegenüber der Umlaufebene des Messers schräggestellte Leitflächen ausgebildet sind, die ausgehend von den in Umlaufrichtung vorderen Längskanten der Messerflügel zu den hinteren Längskanten hin einen ansteigenden Verlauf haben. Ein äußerer Schneidenabschnitt ist derart profiliert, dass dieser unterhalb der Ebene des Nabenteils liegt.

Die US-A-5,327,710 zeigt ein Mulchmesser für einen Rasenmäher, dass eine Kombination eines sich von der Messerspitze mit etwa 20° nach oben erstreckenden Flansches, einem benachbarten Ausschnitt an der Rückseite des Messers und einem nach unten beabstandeten Flanschbereich aufweist.

Die der Erfindung zugrunde liegende Aufgabe wird darin gesehen, die Mulchwirkung bekannter Messerbalken zu verbessern.

Diese Aufgabe wird erfindungsgemäß durch die Lehre der Patentansprüche 1, 8 bzw. 9 gelöst, wobei in den weiteren Patentansprüchen Merkmale aufgeführt sind, die die Lösung in vorteilhafter Weise weiterentwickeln.

Auf diese Weise wird ein Messerbalken zur Verfügung gestellt, welcher ein verbessertes aerodynamisches Verhalten aufweist.

Wenigstens einer der Mulchflügel, vorzugsweise aber beide Mulchflügel weisen einen ersten Mulchbereich und einen zweiten Mulchbereich auf, wodurch die Gebläsewirkung des nach oben gebogenen Mulchflügels weiter gesteigert wird. Der erste Mulchbereich wird von dem zweiten Mulchbereich durch eine Einkerbung getrennt. Eine derartige Einkerbung ist in einfacher Art und Weise herzustellen, wenn sie sich von einem nacheilenden Bereich bzw. der voreilenden Kante des Trennblatts in Richtung des voreilenden Bereichs bzw. der ebensolchen Kante verjüngt. Die Einkerbung erstreckt sich zumindest im Wesentlichen in Richtung eines ansteigenden Übergang zwischen einem ersten, vorzugsweise unteren und außen liegenden Schneidbereich und einem zweiten, in einer höheren Ebene rotieren Schneidbereich, der weiter innen bzw. einem zentralen Bereich des Trennblatts zugewandten Bereich angeordnet ist, wodurch sich ein besonders günstiges aerodynamisches Verhalten ergibt. Eine derartige Einkerbung bzw. ein derartiger Einschnitt kann beispielsweise im Wesentlichen V- oder auch U-förmig ausgebildet sein. Der Einschnitt kann mittig bzw. symmetrisch ausgebildet oder auch links oder rechts angeschlagen sein bzw. unsymmetrisch, beispielsweise in der Art eines in der Mitte durchgeschnitten V mit einer schrägen und einer geraden Kante oder in der Art eines halbierten U mit einer gerundeten und einer geraden Kante ausgebildet sein. Durch die Einkerbung bzw. den Einschnitt wird ein direkter Druckausgleich von der Oberseite zur Unterseite des Messerbalkens im Bereich des Mulchflügels erreicht werden. Ein derartiger Druckausgleichs zieht keine nennenswerten Verluste des Grastransports nach sich. Es kann aber eine wesentliche Geräuschreduzierung erreicht werden.

Weist der Messerbalken Schneidbereich bzw. Schneidkanten auf, welche vertikal beabstandet sind bzw. sich in unterschiedliche, zumindest im Wesentlichen horizontalen Ebenen erstrecken, so kann das zu schneidende Pflanzenmaterial in unterschiedlichen Höhen bzw. mehrfach geschnitten werden. Auf diese Weise wird eine besonders gründliche Zerkleinerung gefördert und somit die Mulchwirkung begünstigt. Es können zwei, aber auch drei oder mehr derartige Schneidkanten vorgesehen sein.

Weist der Messerbalken bzw. das Trennblatt des Messerbalkens Mulchbuckel auf, so können diese das gemähte Gut zusätzlich beschleunigen bzw. es ablenken, wodurch eine weitere Zerkleinerung gefördert wird.

Sind zwischen den Schneidbereichen Übergänge vorgesehen, welche wiederum als Schneiden ausgebildet sind, so tragen diese zu einer Zerkleinerung des Schnittguts bei. Darüber hinaus können derartige Übergänge, insbesondere wenn sie unterschiedlich steil ausgebildet sind, das Schnittgut lenken bzw. weiter beschleunigen, um so die Mulchwirkung weiter zu begünstigen.

Ist das Trennblatt bereichsweise mit einer Vertiefung oder einer Sicke versehen, so kann dies die Stabilität des Trennblatts erhöhen. Eine derartige Vertiefung bzw. Sicke ist vorzugsweise in einem Übergangsbereich zwischen dem/den Schneidbereich(en) und einem zentralen bzw. Anschlussbereich des Trennblatts vorgesehen.

In einem nacheilenden Bereich des Trennblatts können Folgebereiche vorgesehen sein, welche bzw. deren nacheilende Kanten vorzugsweise im Betrieb unterhalb der Schneidkanten angeordnet sind bzw. in einer tiefen Ebene rotieren. Auf diese Weise können die Folgebereiche in der Art einer Kehreinrichtung wirken und geschnittenes Gras bzw. Gut gleichmäßig Verteilen und/oder tief in den gemähten Rasen einarbeiten, so dass ein besonders gutes Mulchbild entsteht.

Ein erfindungsgemäßer Messerbalken kann an handgeführten wie auch handgeschobenen Mähgeräten oder auch an Mähwerken für selbstfahrende Fahrzeuge oder an durch solche gezogene oder geschobene Mähwerken verwendet werden. Es kann sich hierbei um spezielle Mulchgeräte handeln, welche ein zumindest im Wesentlichen geschlossenes Gehäuse aufweisen. Aber auch der Einsatz an eine oder mehrere Auswurföffnung(en) aufweisenden Mähgeräten bzw. Mähwerken ist möglich, wobei diese Auswurföffnungen zur Erzielung einer verbesserten Mulchleistung verschlossenen werden können.

In der Zeichnung ist ein nachfolgend näher beschriebenes Ausführungsbeispiel der Erfindung dargestellt. Es zeigt:
- Fig. 1: eine Seitenansicht eines Mähgeräts zur Rasen-, Garten- und Grundstückspflege, wobei ein Gehäuse des Mähgeräts teilweise aufgebrochen dargestellt ist, so dass eine im Innern des Gehäuses angeordneter Messerbalken sichtbar wird,
- Fig. 2: eine Ansicht des erfindungsgemäßen Messerbalkens in einer perspektivischen Darstellung,
- Fig. 3: eine Seitenansicht des Messerbalkens aus Figur 2 betrachtet und
- Fig. 4: eine Ansicht des Messerbalkens aus Fig. 2 und 3 von oben betrachtet.

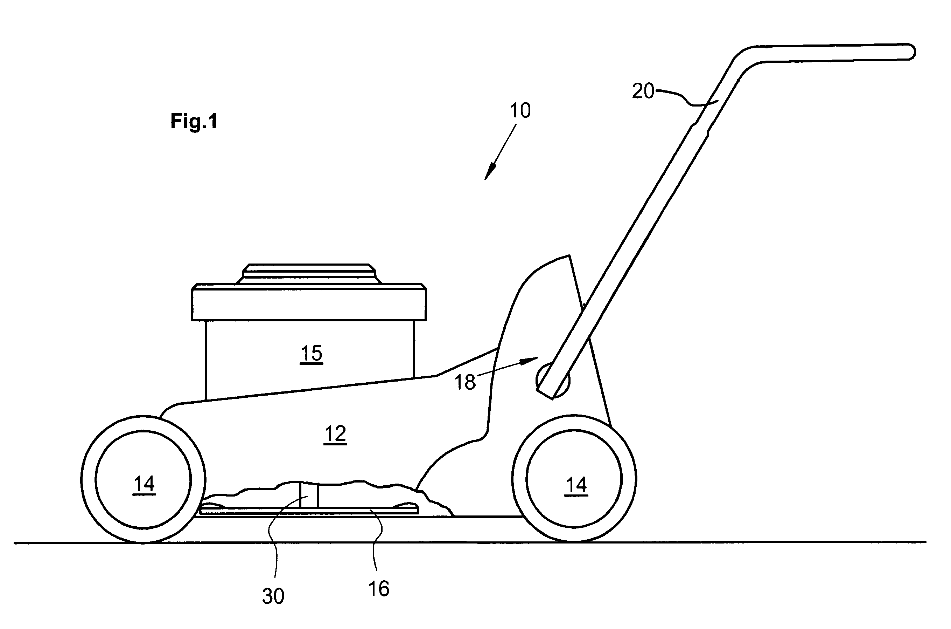

Es wird zuerst auf Fig. 1 Bezug genommen, in der ein Mähgerät 10 in der Art eines handgeführten oder auch handgeschobenen Rasenmähers gezeigt wird. Das Mähgerät 10 weist ein in Bodenrichtung geöffnetes Gehäuse 12 auf, das sich über zwei vordere und zwei rückwärtige Räder 14 auf dem Untergrund abstützt. An dem Gehäuse 12 ist ein nur andeutungsweise dargestellter Antrieb 15, beispielsweise in der Art eines Verbrennungsmotors oder auch eines Elektroantriebs vorgesehen, um ein unterhalb des Gehäuses 12 angebrachtes Mähmesser bzw. einen Messerbalken 16 anzutreiben, um Gras bzw. Pflanzenwuchs zu schneiden. An dem rückwärtigen Bereich 18 des Gehäuses 12 ist ein Führungsholm 20 angebracht.

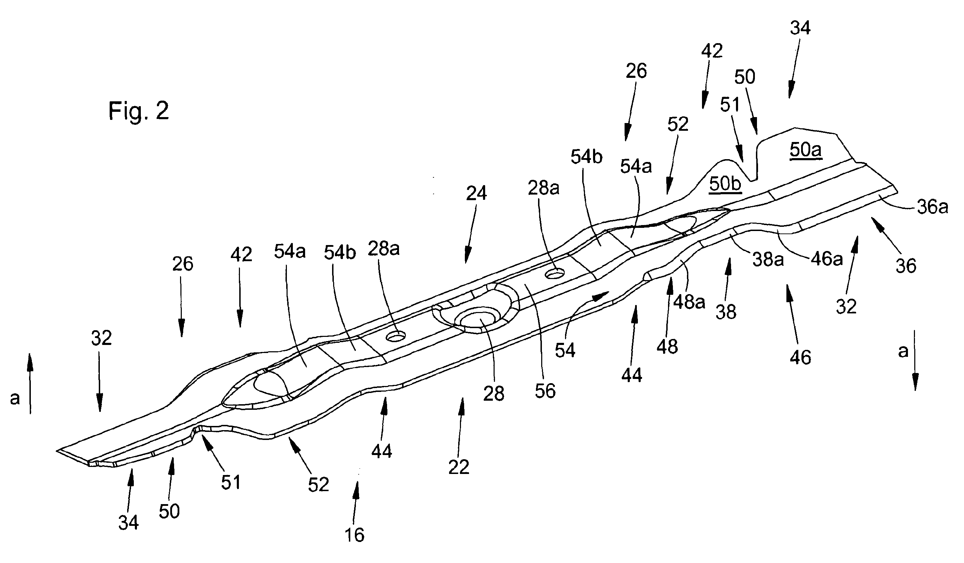

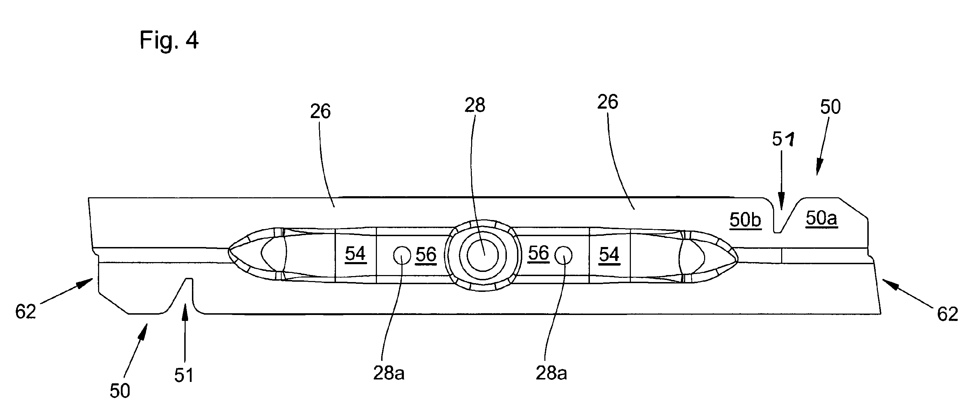

Es wird nun auf Fig. 2 bis 4 Bezug genommen, in denen der Messerbalken 16 genauer dargestellt wird. Der Messerbalken 16 weist ein im Wesentlichen längliches Trennblatt 22. Das Trennblatt 22 wiederum weist einen zentralen Bereich 24 sowie zwei an diesen zentralen Bereich 24 anschließende äußere Bereiche bzw. Trennarme 26 auf, welche bezogen auf den zentralen Bereich 24 symmetrisch ausgebildet sind.

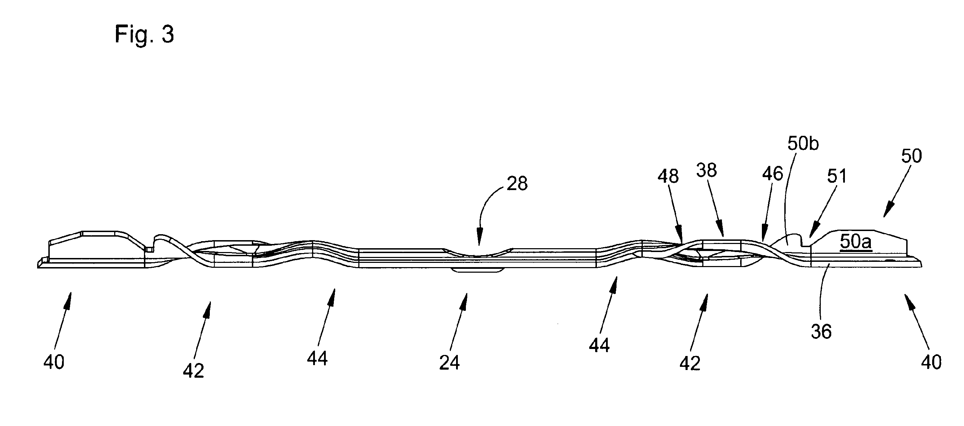

Der zentrale Bereich 24 ist in im Wesentlichen konventioneller Weise in der Art eines Anschlussbereichs ausgebildet. Ein derartiger Anschlussbereich kann wie dies in den Figuren 2 und 3 dargestellt ist, eine zentrale Öffnung 28 zum Aufsetzen des Messerbalkens 16 auf eine in Figur 1 gezeigten, sich im Betrieb in Rotation befindender Welle 30 aufweisen. Der Messerbalken 16 wird durch geeignete bekannte Mittel, die nicht dargestellt sind, auf der Welle 30 befestigt. Alternativ kann der Messerbalken 16 bzw. der zentrale Bereich 24 zwei oder mehr Öffnungen 28a bzw. Bohrungen aufweisen, mittels der der Messerbalken 16 an einem mit der Welle 30 verbundenen Anschlussflansch angeschlossen werden kann. Weitere Ausgestaltungen sind denkbar.

Die Trennarme 26 weisen einen bezogen auf die Drehrichtung (Pfeil a) des Messerbalkens 16 voreilenden Bereich 32 und einen nacheilenden Bereich 34 auf.

Der voreilende Bereich 32 weist einen ersten Schneidbereich 36 mit einer ersten Schneidkante 36a und einen zweiten Schneidbereich 38 mit einer zweiten Schneidkante 38a auf, wobei der erste Schneidbereich 36 angrenzend an einen äußeren, dem zentralen Bereich 24 abgelegenen Endbereich 40 des Trennblatts 22 angeordnet. Der zweite Schneidbereich 38 grenzt im Wesentlichen innen bzw. in einem dem zentralen Bereich 24 zugewandten Bereich 42 des Trennblatts 22 an den ersten Schneidbereich an.

Es wird nun insbesondere auf die Figur 3 Bezug genommen, aus der deutlich wird, dass der erste Schneidbereich 36 und der zweite Schneidbereich 38 im Betrieb bzw. in eingebauten Zustand in unterschiedlichen Ebenen in der Art angeordnet sind, dass der zweite Schneidbereich 38 in eingebautem Zustand bzw. im Betrieb des Mähgeräts oberhalb des ersten Schneidbereichs 36 angeordnet ist. An den zweiten Schneidbereich 38 schließt sich in Richtung des zentralen Bereichs 24 ein nicht mit einer Schneide versehener Übergangsbereich 44 an.

Die Schneidbereiche 36, der Bereich 42 und der Übergangsbereich 44 können als Hauptebenen des Messerbalkens 16 bzw. des Trennblatts 22 betrachtet werden und sind jeweils gegeneinander verschränkt.

Insbesondere aus Figur 3 wird deutlich, dass der erste Schneidbereich 36 und der zweite Schneidbereich 38 sowie der zweite Schneidbereich und der Übergangsbereich 44 sanfte, Radien aufweisende Übergänge 46, 48 aufweisen, wobei der nach oben aufsteigende Übergang 46 zwischen dem ersten Schneidbereich 36 und dem zweiten Schneidbereich 38 und der absteigende Übergang 48 zwischen dem zweiten Schneidbereich 38 und dem Übergangsbereich 44 etwa gleich steil ausgebildet sind. Die Übergänge 46, 48 weisen bezogen auf das Trennblatt 22 als solches voreilenden Schneidkanten 46a, 48a auf. Es ergibt sich eine Abfolge der Schneidkanten 36a, 46a, 38a, 48a von außen nach innen betracht, die von tief über hoch nach mittig gestaffelt ist.

Der zentrale Bereich 24 ist in eingebautem Zustand bzw. im Betrieb etwa in der gleichen Ebene angeordnet wie die der zweiten Schneidbereichs 36, 38. Der Übergangsbereich 44 reicht von dem Übergang 48 zu dem zentralen Bereich 24 und fällt von dem Übergang 48 zu dem zentralen Bereich 24 sanft bzw. in abgerundeter Art und Weise an.

In dem nacheilenden Bereich ist in dem äußeren Bereich 40 des Trennblatts jeweils ein zweigeteilter, bezogen auf das Trennblatt nach oben aufgebogener Mulchflügel 50 angeordnet. An diesen schließt sich ein dem voreilenden Bereich 42 gegenüberliegender Folgebereich 52 an, der wiederum über den Übergangsbereich 44 in den zentralen Bereich 24 übergeht.

Die Mulchflügel 50 weisen jeweils einen ersten Mulchbereich 50a, der an den äußeren Endbereich 40 des Trennblatts 22 angrenzt, sowie einen zweiten Mulchbereich 50b auf, der dem zentralen Bereich 24 zugewandt ist, wobei zwischen den beiden Mulchbereichen 50a und 50b eine Einkerbung 51 vorgesehen ist. Die Einkerbung 51 ist derart ausgebildet, dass sie sich von der nacheilenden Kante des Trennblatts in Richtung der voreilenden Kante des Trennblatts verjüngt, wobei sie etwa zu einem Drittel in das Trennblatt einschneidet bzw. die Einkerbung den Mulchflügel 50 als solchen nicht vollständig durchschneidet, sondern der Kerbengrund vor der Biegung des Mulchflügels 50 angeordnet ist. Der Mulchflügel 50 schließt sich an den Schneidbereich 36 an und steigt bezogen auf diesen zu seinem Ende hin an und läuft in Richtung des Folgebereichs 52 aus.

An den jeweiligen zweiten Schneidbereich 38 angrenzend weist das Trennblatt 22 bzw. die Trennarme 26 zwischen dem voreilenden Bereich 42 und dem nacheilenden Folgebereich 52 jeweils einen nach oben ragenden Mulchbuckel 54 auf, welcher sich in dem Übergangsbereich erstreckt, sanft ansteigt und ebenso in zentralen Bereich 24 ausläuft. Der Mulchbuckel 54 weist einen ersten Bereich 54a und einen zweiten, dem zentralen Bereich 24 zugewandten Bereich 54b auf, wobei der zweite Bereich 54b bezogen auf den ersten Bereich 54a breiter, höher und schärfer ausgeprägt ist. Der zweite Bereich beginnt im Bereich der Schneidkante 48a und endet zum Beginn der Schneidkante 38a. Es schließt sich der erste, niedrigere, vertikal weniger stark ausgeprägte Bereich 54a an.

An den Mulchbuckel 54 anschließend weist der zentrale Bereich einen erhöhten mittleren Bereich 56 in der Art einer Sicke auf, welcher im Wesentlichen eine Verlängerung des Mulchbuckels 54 darstellt.

Die äußeren Endbereich 40 weisen jeweils Abkantungen 62 in der Art auf, dass der äußere Schneidbereich 36 über den Mulchflügel 50 hinausragt.

Die Position und Lage der Schneidbereiche 36 und 38 und Übergange 46, 48 bzw. der Schneidkanten 36a, 46a, 38a, 48a, der Bereiche bzw. Hauptebenen 36, 53, 44 des Trennblatts 22 und der Mulchflügel 50 bzw. der Mulchflügelbereich 50a und 50 mit der Einerbung 51 ergeben im Mulchbetrieb maßgebliche Vorteile. Der erste Schneidbereich schneidet zunächst vom stehenden Grashalm ab. Durch die gegenläufig verschränkten Bereiche 36 und 42 wird ein Transport des geschnittenen Guts weiter nach innen erzielt. Im Bereich der Schneidkante 38a wird das Schnittgut erstmalig weiter zerkleinert. Dem im Bereich 42 erzeugten nach unten gerichteten Luftstrom wirkt der angestellte Bereich 48 bzw. die angestellte Schneidkante 48a in Kombination mit dem Mulchbuckel 54 bzw. dem zweiten Mulchbuckelbereich 54b entgegen, so dass das Gras in Aufwärtsrichtung transportiert wird und ein weiteres Mal zerkleinert wird. Dieser Vorgang wiederholt sich mehrfach in Abhängigkeit von Grasart, Grasvolumen und Feuchtigkeit, sodass eine weitestgehende Zerkleinerung des Schnittguts stattfinden kann.

## Patentansprüche

1. Messerbalken (16), insbesondere für ein Mähgerät (10), mit gegenüberliegenden Endbereichen (40), mit im Betrieb voreilenden Schneidbereich (36) mit Schneidkanten (36a) und weiteren Schneidbereiche (38) mit Schneidkanten (38a), welche im Betrieb vorzugsweise oberhalb der ersten Schneidbereiche (36) bzw. Schneidkanten (36a) angeordnet sind, und mit nacheilenden Mulchflügeln (50), die jeweils einen ersten Mulchbereich (50a) und einen zweiten Mulchbereich (50b)aufweisen, welche durch eine Einkerbung (51) getrennt sind, **dadurch gekennzeichnet, dass** die Einkerbung jeweils im Wesentlichen einem Übergang zwischen dem ersten Schneidbereich (36) und dem zweiten Schneidbereich (38) gegenüberliegend angeordnet ist.

2. Messerbalken nach Anspruch 1, **dadurch gekennzeichnet, dass** sich die Einkerbung (51) vorzugsweise von der nacheilenden Kante des Trennblatts (22) in Richtung der voreilenden Kante des Trennblatts (22) verjüngt.

3. Messerbalken nach Anspruch 1 oder 2, **dadurch gekennzeichnet, dass** die zweiten Schneidbereiche (38) bezogen auf die ersten Schneidbereiche (36) einem zentralen Bereich des Messerbalkens zugewandt sind.

4. Messerbalken nach einem oder mehreren der vorherigen Ansprüche, **dadurch gekennzeichnet, dass** angrenzend an den/die Schneidbereiche (36, 38) Mulchbuckel (54) vorgesehen sind, wobei die Mulchbuckel (54) vorzugsweise in einem an einen zentralen Bereich (24) des Trennblatts (22) angrenzenden Übergangsbereich (44) bzw. dem zweiten Schneidbereich (38) nacheilend und dem Folgebereich (52) und/oder dem Mulchflügel (50) voreilend vorgesehen sind.

5. Messerbalken nach einem oder mehreren der vorherigen Ansprüche, **gekennzeichnet durch** einen nacheilenden Folgebereich (52), der im Betrieb zumindest im Wesentlichen in der Schneidebene einer der Schneidkanten (36a, 38a) vorzugsweise der unteren Schneidkante (36a) rotiert.

6. Messerbalken nach einem oder mehreren der vorherigen Ansprüche, **dadurch gekennzeichnet, dass** an den zweiten Schneidbereich (38) angrenzend ein vorzugsweise keine Schneidkante aufweisender Übergangsbereich (44) vorgesehen ist.

7. Messerbalken nach Anspruch 6, **dadurch gekennzeichnet, dass** das Trennblatt (22) zumindest in dem zentralen Bereich (24) einen erhöhten mittleren Bereich 56, der vorzugsweise in der Art einer Sicke ausgeführt ist, aufweist, der vorzugsweise an die Mulchbuckel (54) angrenzt.

8. Messerbalken nach einem oder mehreren der vorherigen Ansprüche, **dadurch gekennzeichnet, dass** die Schneidbereiche (36, 38), Schneidkanten (36a, 38a), der Übergangsbereich, der Mulchbuckel (54) zumindest teilweise sanfte Übergänge aufweisen.

9. Mähgerät oder Mähwerk mit wenigstens einem Messerbalken(16) nach einem oder mehreren der vorherigen Ansprüche.

## Claims

1. Cutter bar (16), in particular for a mowing machine (10), having opposite end regions (40), having a cutting region (36) with cutting edges (36a), said cutting region (36) leading during operation, and further cutting regions (38) with cutting edges (38a), said further cutting regions (38) being arranged preferably above the first cutting regions (36) or cutting edges (36a) during operation, and having trailing mulching wings (50), which each have a first mulching region (50a) and a second mulching region (50b), which are separated by a notch (51), **characterized in that** the notch is arranged in each case substantially opposite a transition between the first cutting region (36) and the second cutting region (38).

2. Cutter bar according to Claim 1, **characterized in that** the notch (51) narrows preferably from the trailing edge of the severing blade (22) in the direction of the leading edge of the severing blade (22).

3. Cutter bar according to Claim 1 or 2, **characterized in that** the second cutting regions (38) are directed towards a central region of the cutter bar with regard to the first cutting regions (36).

4. Cutter bar according to one or more of the preceding claims, **characterized in that** mulching humps (54) are provided adjoining the cutting region or regions (36, 38), wherein the mulching humps (54) are provided preferably in a transition region (44) adjoining a central region (24) of the severing blade (22) or are provided in a manner trailing the second cutting region (38) and leading the following region (52) and/or the mulching wing (50).

5. Cutter bar according to one or more of the preceding claims, **characterized by** a trailing following region (52) which, during operation, rotates at least substantially in the cutting plane of one of the cutting edges (36a, 38a), preferably the lower cutting edge (36a).

6. Cutter bar according to one or more of the preceding claims, **characterized in that** a transition region (44) which has preferably no cutting edge is provided adjoining the second cutting region (38).

7. Cutter bar according to Claim 6, **characterized in that** the severing blade (22) has, at least in the central region (24), a raised middle region (56), which is configured preferably in the manner of a bead and preferably adjoins the mulching hump (54).

8. Cutter bar according to one or more of the preceding claims, **characterized in that** the cutting regions (36, 38), cutting edges (36a, 38a), the transition region and the mulching hump (54) have at least partially smooth transitions.

9. Mowing machine or mower having at least one cutter bar (16) according to one or more of the preceding claims.

## Revendications

1. Barre porte-lames (16), en particulier pour une faucheuse (10), comprenant des zones d'extrémité opposées (40), des zones de coupe (36) en avant pendant le fonctionnement, munies d'arêtes de coupe (36a), et d'autres zones de coupe (38) munies d'arêtes de coupe (38a), qui sont disposées pendant le fonctionnement de préférence au-dessus des premières zones de coupe (36) ou arêtes de coupe (36a), et des ailes de paillage en arrière (50), qui présentent à chaque fois une première zone de paillage (50a) et une deuxième zone de paillage (50b) qui sont séparées par une encoche (51), **caractérisée en ce que** l'encoche est disposée à chaque fois sensiblement en regard d'une transition entre la première zone de coupe (36) et la deuxième zone de coupe (38).

2. Barre porte-lames selon la revendication 1, **caractérisée en ce que** l'encoche (51) se rétrécit de préférence depuis l'arête arrière de la pale de tranchage (22) dans la direction de l'arête avant de la pale de tranchage (22).

3. Barre porte-lames selon la revendication 1 ou 2, **caractérisée en ce que** les deuxièmes zones de coupe (38) sont tournées par rapport aux premières zones de coupe (36) vers une zone centrale de la barre porte-lames.

4. Barre porte-lames selon l'une quelconque ou plusieurs des revendications précédentes, **caractérisée en ce que** des renflements de paillage (54) sont prévus à côté de la ou des zones de coupe (36, 38), les renflements de paillage (54) étant prévus de préférence dans une zone de transition (44) adjacente à une zone centrale (24) de la pale de tranchage (22) ou derrière la deuxième zone de coupe (38), et devant la zone de suite (52) et/ou l'aile de paillage (50).

5. Barre porte-lames selon l'une quelconque ou plusieurs des revendications précédentes, **caractérisée par** une zone de suite (52) en arrière, qui, pendant le fonctionnement, tourne au moins sensiblement dans le plan de coupe de l'une des arêtes de coupe (36a, 38a), de préférence de l'arête de coupe inférieure (36a).

6. Barre porte-lames selon l'une quelconque ou plusieurs des revendications précédentes, **caractérisée en ce qu'**une zone de transition (44) ne présentant de préférence pas d'arête de coupe est prévue à côté de la deuxième zone de coupe (38).

7. Barre porte-lames selon la revendication 6, **caractérisée en ce que** la pale de tranchage (22) présente, au moins dans la zone centrale (24), une zone médiane rehaussée (56), qui est réalisée de préférence à la manière d'une moulure, qui est de préférence adjacente au renflement de paillage (54).

8. Barre porte-lames selon l'une quelconque ou plusieurs des revendications précédentes, **caractérisée en ce que** les zones de coupe (36, 38), les arêtes de coupe (36a, 38a), la zone de transition, le renflement de paillage (54), présentent des transitions au moins en partie douces.

9. Faucheuse ou mécanisme de tonte comprenant au moins une barre porte-lames (16) selon l'une quelconque ou plusieurs des revendications précédentes.
